(19) Europäisches Patentamt
European Patent Office
Office européen des brevets

(11) **EP 0 922 672 B1**

(12) **FASCICULE DE BREVET EUROPEEN**

(45) Date de publication et mention
de la délivrance du brevet:
**06.02.2002 Bulletin 2002/06**

(51) Int Cl.7: **C01B 35/06**

(21) Numéro de dépôt: **98402922.3**

(22) Date de dépôt: **24.11.1998**

(54) **Génération de trifluorure de bore et d'acide sulfurique à partir d'hydrate de trifluorure de bore**

Herstellung von Bortrifluorid und Schwefelsäure aus Bortrifluoridhydrat

Boron trifluoride and sulfuric acid generation from boron trifluoride hydrate

(84) Etats contractants désignés:
**AT BE DE ES FR GB IT NL**

(30) Priorité: **08.12.1997 FR 9715489**

(43) Date de publication de la demande:
**16.06.1999 Bulletin 1999/24**

(73) Titulaire: **Atofina**
**92800 Puteaux (FR)**

(72) Inventeurs:
• **Chalieux, Jean-Paul**
**69540 Irigny (FR)**
• **Pralus, Christian**
**69450 Saint-Cyr au mont d'or (FR)**

(56) Documents cités:
**EP-A- 0 364 815** **WO-A-90/06284**

• **PATENT ABSTRACTS OF JAPAN vol. 008, no. 138 (C-231), 27 juin 1984 & JP 59 050018 A (MORITA KAGAKU KOGYO KK), 22 mars 1984**

## Description

La présente invention concerne le domaine du trifluorure de bore et de l'acide sulfurique et a plus particulièrement pour objet la transformation des effluents industriels d'hydrate de trifluorure de bore en trifluorure de bore et en acide sulfurique.

Le trifluorure de bore est un gaz qui est principalement utilisé dans l'industrie comme catalyseur dans un grand nombre de réactions : polymérisation, estérification, alkylation, isomérisation. Habituellement, après usage, le trifluorure de bore est traité par une solution aqueuse d'hydroxyde de sodium et l'effluent ainsi obtenu, constitué de dérivés fluoroborés, est rejeté.

Pour éviter ces rejets fluoroborés, le trifluorure de bore après usage peut être récupéré, en sortie de réaction, sous forme de solutions d'hydrate de $BF_3$ obtenues, d'une part, par mise en contact du $BF_3$ avec de l'eau et, d'autre part, par lavage à l'eau des composés organiques formés dans la réaction catalysée par $BF_3$ (voir par exemple le brevet EP 364 815).

En raison de la présence d'impuretés, essentiellement organiques, les solutions d'hydrate de trifluorure de bore sont généralement plus ou moins colorées, leur teneur en carbone organique pouvant aller de quelques ppm à quelques milliers de ppm (valeurs habituelles : environ 10 à 1000 ppm).

Le brevet US 5 536 484 décrit un procédé de valorisation des hydrates techniques de $BF_3$ sous forme de solutions aqueuses d'acide tétrafluoroborique répondant aux spécifications commerciales. Cependant, l'étape finale de décoloration nécessite l'emploi d'un charbon actif qui doit être détruit après usage.

Un autre moyen pour valoriser un hydrate technique de $BF_3$ est évoqué dans le brevet EP 364 815 et consiste à régénérer le trifluorure de bore en traitant l'hydrate technique par l'acide sulfurique, l'oléum ou $SO_3$. Malheureusement, l'acide sulfurique résultant de cette opération présente une coloration jaune à noire, ce qui le rend impropre à son utilisation sans traitement préalable de purification.

D'autre part, les matières organiques et le dioxyde de carbone ne sont pas acceptables dans un $BF_3$ commercial destiné à des applications en catalyse. Le produit commercial actuel doit contenir moins de 10 mg de carbone organique et moins de 5 mg de $CO_2$ par kg de $BF_3$.

Il a maintenant été trouvé un procédé permettant, à partir d'hydrate technique de $BF_3$ et d'oléum, de préparer un trifluorure de bore et un acide sulfurique répondant tous deux aux spécifications commerciales. Ce procédé est particulièrement intéressant puisqu'il ne génère pas de déchets et ne nécessite pas l'emploi de charbon actif.

Le procédé selon l'invention comprend successivement les étapes consistant

*(a)* à faire réagir l'oléum avec l'hydrate technique de $BF_3$,
*(b)* à récupérer le $BF_3$ gazeux ainsi libéré, et
*(c)* à soumettre l'acide sulfurique co-produit dans l'étape (a) à un traitement par du peroxyde d'hydrogène, et à un traitement à l'air.

L'hydrate de $BF_3$ est un dihydrate de formule : $BF_3,2H_2O$ et est mis en oeuvre, conformément au procédé selon l'invention, sous forme de composition aqueuse appelée hydrate technique de $BF_3$. Celle-ci comprend essentiellement un mélange d'eau et de dihydrate, et les impuretés précédemment mentionées. Elle est généralement obtenue par absorption dans l'eau du $BF_3$ gazeux après utilisation dans différents procédés de polymérisation (poly-$\alpha$-oléfines, résines de pétrole, ...) et par lavage à l'eau du polymère issu de cette polymérisation. Elle peut également provenir de l'hydrolyse des complexes de $BF_3$ usagés, tels que par exemple $BF_3, O(C_2H_5)_2$.

La teneur en $BF_3$ de l'hydrate technique de $BF_3$ à traiter peut varier dans de larges limites, mais pour une valorisation plus aisée on préfère utiliser un hydrate technique de $BF_3$ ayant un titre compris entre 35 et 65,3 %, de préférence entre 47 et 65,3 % (exprimé en poids de $BF_3$ pour 100 g de composition aqueuse). Sauf indication contraire, les pourcentages indiqués dans le présent texte sont des pourcentages en poids.

La teneur en $BF_3$ de l'hydrate technique de $BF_3$ peut également être exprimée par le nombre x de moles d'eau, correspondant à des molécules d'eau libre, c'est-à-dire non complexées, pour 1 mole de $BF_3$. Les domaines de teneur pondérale précédemment définis pour $BF_3$ correspondent ainsi à une valeur de x comprise entre environ 0 et 5 pour le domaine large et 0 et 2,2 pour le domaine préféré. Le mélange d'eau et de dihydrate compris dans l'hydrate technique de $BF_3$ peut ainsi être défini par l'expression : $BF_3, 2H_2O + x H_2O$.

Si nécessaire, une façon d'atteindre cette teneur en $BF_3$ consiste, ainsi qu'il est décrit dans le brevet EP 364 815, à concentrer un hydrate dilué de $BF_3$ par élimination d'eau sous vide ; l'hydrate concentré, soutiré en pied de colonne, contient des traces de matières organiques lourdes (teneur en carbone organique : environ 10 à 1000 ppm).

L'oléum mis en oeuvre dans le procédé selon l'invention est une solution d'anhydride sulfurique $SO_3$ dans l'acide sulfurique, dont la teneur en $SO_3$ est comprise entre 5 et 65 %, de préférence entre 10 et 65 %. Cette teneur peut également être exprimée par le nombre y de moles de $H_2SO_4$ solubilisant 1 mole de $SO_3$. Les domaines de teneur pondérale en $SO_3$ indiqués ci-dessus correspondent ainsi à une valeur de y comprise entre 0,44 et 15,5, de préférence entre 0,44 et 7,4. L'oléum peut être défini par l'expression : $SO_3$ + y $H_2SO_4$.

La préparation de trifluorure de bore à partir de l'hydrate technique de $BF_3$ et d'oléum (étape <u>a</u>) correspond à la réaction suivante :

$$(BF_3, 2H_2O + xH_2O) + (2+x)[SO_3 + yH_2SO_4] \rightarrow BF_3 + (2+x+2y+xy)H_2SO_4 \qquad (1)$$

dans laquelle x et y sont tels que définis précédemment.

Les quantités d'oléum et d'hydrate technique de $BF_3$ que l'on fait réagir dans l'étape (a) du procédé selon l'invention sont avantageusement choisies de telle sorte que la quantité d'oléum (exprimée en nombre de moles de $SO_3$), divisée par la quantité d'hydrate technique (exprimée en nombre total de moles d'eau libre ou complexée) est comprise entre 0,5 et 1,5 et est, de préférence, voisine de 1.

La réaction selon l'étape (a) est généralement effectuée à une température comprise entre 75 et 110°C, de préférence entre 100 et 110°C.

Le trifluorure de bore gazeux, libéré par la réaction et récupéré, conformément à l'étape (b) du procédé selon l'invention, généralement en tête du réacteur, ne contient ni matières organiques, ni inertes comme l'azote ou le gaz carbonique. Il présente toutes les caractéristiques d'un produit commercial et peut être conditionné de façon usuelle, connue en soi, par exemple par compression.

Conformément à l'étape (c) du procédé selon l'invention, l'acide sulfurique produit dans l'étape (a) est soumis à un traitement par du peroxyde d'hydrogène et à un traitement à l'air, lesdits traitements étant réalisés successivement, et dans un ordre quelconque.

Le traitement par $H_2O_2$ détruit par oxydation les composés organiques qui sont présents à l'état d'impuretés dans l'acide sulfurique produit dans l'étape (a) et qui proviennent de l'hydrate technique de $BF_3$. La réaction chimique mise en oeuvre est :

$$C_{organique} + 2H_2O_2 \rightarrow CO_2 + 2H_2O \qquad (2)$$

dans laquelle $C_{organique}$ représente lesdites impuretés organiques, également dénommées "carbone d'origine organique".

Ce traitement par $H_2O_2$ produit avantageusement un $H_2SO_4$ incolore.

La quantité de peroxyde d'hydrogène à utiliser peut varier dans de larges limites. Pour un traitement économique, cette quantité est avantageusement déterminée de la façon suivante : on mesure par dosage, au moyen d'un analyseur de carbone organique total, le poids de carbone d'origine organique présent dans l'hydrate technique de $BF_3$ mis en oeuvre dans l'étape (a). La quantité de $H_2O_2$, exprimée en nombre de moles, est comprise entre 4 et 200 fois le nombre d'équivalent molaire de carbone d'origine organique ainsi dosé, de préférence entre 5 et 20 fois.

Le peroxyde d'hydrogène est généralement mise en oeuvre sous forme d'une solution aqueuse dont le titre est compris entre 3 et 70 %, de préférence entre 10 et 70 %.

Le traitement par $H_2O_2$ est réalisé à une température comprise entre 80 et 115°C, de préférence comprise entre 105 et 110°C.

Le traitement à l'air de l'étape (c) du procédé selon l'invention permet d'éliminer l'essentiel du trifluorure de bore dissous dans l'acide sulfurique, l'objectif préférentiel étant de réduire sa teneur en $BF_3$ à une valeur inférieure à 50 ppm. Ce traitement est généralement réalisé par balayage. Le $BF_3$ ainsi dégagé peut avantageusement être absorbé dans l'eau de façon à fournir un hydrate de $BF_3$ qui peut éventuellement être recyclé à l'étape (a) du procédé selon l'invention.

Le procédé selon l'invention peut être mis en oeuvre de façon continue ou discontinue.

Lorsqu'on opère en discontinu, on met en oeuvre l'étape (a) du procédé selon l'invention dans un premier réacteur. Le traitement par $H_2O_2$ et le balayage à l'air peuvent être réalisés dans deux réacteurs différents ou dans un même réacteur, ledit ou lesdits réacteur(s) étant éventuellement celui utilisé à l'étape (a). On peut indifféremment procéder d'abord au traitement par $H_2O_2$ puis au balayage à l'air, ou l'inverse.

Lorsque, de façon préférée, on opère en continu, on utilise avantageusement trois réacteurs en série, le premier pour réaliser la réaction de l'oléum avec l'hydrate technique de $BF_3$, et récupérer en tête le $BF_3$ gazeux, et les deux autres pour procéder successivement mais dans un ordre quelconque, au traitement par $H_2O_2$ et au balayage à l'air.

De préférence, le premier réacteur est un réacteur agité dont le niveau du milieu réactionnel ($H_2SO_4$ 100 %) est maintenu constant au moyen d'une surverse débouchant dans le second réacteur.

Les exemples suivants illustrent l'invention sans la limiter. Sauf indication contraire, les pourcentages sont exprimés en poids.

## EXEMPLE 1

On utilise une installation comportant deux réacteurs en série. Le premier réacteur a une capacité de 400 ml (200 ml de contenance utile pour le milieu réactionnel) et est équipé d'un agitateur à hélice (4 pales) de diamètre 4 cm ; la vitesse de rotation du mobile est de 500 tours par minute. Ce réacteur est équipé d'une double enveloppe parcourue par un fluide caloporteur pour évacuer la chaleur de réaction et maintenir la température entre 104 et 107°C.
Les deux réactifs, l'hydrate technique de $BF_3$ et l'oléum 65 %, sont pesés en continu et introduits dans le réacteur contenant initialement 200 ml d'acide sulfurique à 100 %. L'hydrate technique de $BF_3$ alimenté au moyen d'une pompe péristaltique et l'oléum alimenté par l'intermédiaire d'une pompe doseuse à piston arrivent dans le milieu réactionnel via deux tubulures plongeantes disposées côte à côte. La surverse du réacteur est dirigée vers un second réacteur ayant les mêmes caractéristiques que le premier (volume, agitation, ...).L'hydrate technique de $BF_3$ présente les caractéristiques suivantes :

$BF_3$ = 55,3 %
$H_2O$ = 44,7 %
densité = 1,505

et sa teneur en carbone organique est de 83 mg par kg d'hydrate technique de $BF_3$.
L'oléum utilisé titre 65 % en $SO_3$ et 35 % en $H_2SO_4$. Le débit d'alimentation d'hydrate technique de $BF_3$ est de 214 g/h et celui d'oléum de 669 g/h, soit un rapport (nombre de moles de $SO_3$ de l'oléum)/(nombre de moles d'eau libre ou complexée de l'hydrate de $BF_3$) égal à 1. Le débit d'acide sulfurique à la surverse est de 773 g/h.
L'acide sulfurique sortant du premier réacteur est traité dans le deuxième réacteur par du peroxyde d'hydrogène ; le débit de $H_2O_2$ mis en oeuvre est de 3,1 g/h d'$H_2O_2$ à 10 %, la température du milieu réactionnel est maintenue entre 104 et 107°C.
Afin de récupérer le $BF_3$ dissous (1,5 % en masse) dans l'acide sulfurique du deuxième réacteur, cet acide est soumis à un balayage à l'air. La teneur en $BF_3$ de l'acide sulfurique traité est inférieure à 50 ppm et le $BF_3$ contenu dans l'air de balayage est absorbé dans l'eau dans une colonne et recyclé sous forme de solution aqueuse de $BF_3$.
Après balayage du $BF_3$ à l'air, l'acide sulfurique titre 99,9 % en $H_2SO_4$ et cet acide sulfurique sortant du deuxième réacteur par une surverse est refroidi à la température ambiante.
Cette installation a fonctionné en continu durant 7 heures. Le $BF_3$ libéré a été récupéré en tête du premier réacteur dans un piège à eau (capacité 5 litres), agité au moyen d'un barreau magnétique. Le $BF_3$ piégé dans l'eau a été analysé pour déterminer ses teneurs en carbone organique et en carbone minéral ($CO_2$ gaz). Plus de 90 % du $BF_3$ initialement sous forme d'hydrate de $BF_3$ a été récupéré sous forme de $BF_3$ gaz qui contient moins de 5 mg de carbone organique/kg de $BF_3$ gaz. Aucune trace de dioxyde de carbone n'a été détectée (limite de détection : 1 mg de $CO_2$/kg $BF_3$ gaz). Ce $BF_3$ a les caractéristiques du $BF_3$ gaz commercial.
L'acide sulfurique obtenu contient moins de 10 mg de carbone organique/kg (limite de détection). Cette qualité d'acide sulfurique est incolore et est donc facilement commercialisable.

## EXEMPLE 2 (comparatif)

On applique le même procédé que pour l'exemple 1, mais sans introduire de peroxyde d'hydrogène dans le deuxième réacteur. Le $BF_3$ récupéré dans le premier réacteur a les caractéristiques d'un $BF_3$ commercial (teneur en carbone organique inférieure à 5 mg/kg de $BF_3$, aucune trace de $CO_2$ détectée), mais l'acide sulfurique sortant du deuxième réacteur est noir et contient 20 mg de carbone organique/kg de $H_2SO_4$.

## EXEMPLE 3 : (comparatif)

En utilisant un hydrate technique de $BF_3$ ayant les caractéristiques suivantes :

$BF_3$ = 47,7 %
$H_2O$ = 52,3 %
densité = 1,38

teneur en carbone organique : 620 mg/kg d'hydrate technique de $BF_3$, on reproduit le procédé de l'exemple 2.
Le débit d'alimentation de l'hydrate technique de $BF_3$ est de 188 g/h et celui de l'oléum de 681 g/h. Le débit d'acide sulfurique résiduaire de la surverse du deuxième réacteur est de 784 g/h. Avant balayage de l'acide sulfurique, le titre massique en $BF_3$ est de 1,3 %. Après balayage du $BF_3$ à l'air, l'acide sulfurique titre 98,4 % en $H_2SO_4$ et 1,6% en $H_2O$.

Le $BF_3$ libéré est récupéré en tête du premier réacteur dans un piège à eau et le $BF_3$ piégé dans l'eau est analysé pour déterminer ses teneurs en carbone organique et en carbone minéral ($CO_2$ gaz) ; il contient moins de 10 mg de carbone organique par kg de $BF_3$.

L'acide sulfurique récupéré à la surverse du deuxième réacteur contient 155 mg de carbone organique par kg d'acide sulfurique. Il est coloré en brun foncé et n'est donc pas valorisable.

### EXEMPLE 4 : (comparatif)

On utilise un hydrate technique de $BF_3$ titrant 53,5 % de $BF_3$ (d = 1,47) et contenant 780 mg de carbone organique/kg d'hydrate de $BF_3$.

Le débit d'alimentation de l'hydrate de $BF_3$ dans le réacteur est de 210 g/h et celui de l'oléum 65 % de 667 g/h. Du peroxyde d'hydrogène à 70 % est introduit à un débit de 4,1 g/h dans ce même réacteur.

En surverse du réacteur, le débit d'acide sulfurique est de 784 g/h. Cet acide contient 1,1 % de $BF_3$. Après balayage, l'acide sulfurique titre 97,2 % de $H_2SO_4$ et 2,8 % d'eau.

Le $BF_3$ sortant en tête du réacteur contient 5300 mg de $CO_2$ par kg de $BF_3$, le rendant impropre à sa commercialisation. La teneur en carbone organique dans l'acide sulfurique est inférieure à 10 mg par kg d'acide.

### EXEMPLE 5

On applique le même mode opératoire que celui décrit dans l'exemple 4, sauf que le peroxyde d'hydrogène est introduit dans le deuxième réacteur, avec le même débit de 4,1 g/h de $H_2O_2$ à 70 %.

Le $BF_3$ sortant en tête du premier réacteur a les caractéristiques d'un $BF_3$ commercial (teneur en carbone organique inférieure à 5 mg/kg de $BF_3$, aucune trace de $CO_2$ détectée). L'acide sulfurique sortant du deuxième réacteur est incolore, contient moins de 10 mg de carbone organique par kg d'acide et peut donc être commercialisé.

### Revendications

1. Procédé de préparation de trifluorure de bore et d'acide sulfurique à partir d'un hydrate technique de $BF_3$ et d'oléum, **caractérisé en ce qu'**il comprend successivement les étapes consistant :

   *(a)* à faire réagir l'oléum avec l'hydrate technique de $BF_3$
   *(b)* à récupérer le $BF_3$ gazeux ainsi libéré, et
   *(c)* à soumettre l'acide sulfurique co-produit dans l'étape (a) à un traitement par du peroxyde d'hydrogène, et à un traitement à l'air.

2. Procédé selon la revendication 1, **caractérisé en ce que** la teneur en $BF_3$ de l'hydrate technique de $BF_3$ est comprise entre 35 et 65,3%, de préférence entre 47 et 65,3%.

3. Procédé selon l'une des revendications 1 ou 2 **caractérisé en ce que**, dans l'étape a), la quantité d'oléum (exprimée en nombre de moles de $SO_3$), divisée par la quantité d'hydrate technique (exprimée en nombre total de moles d'eau libre ou complexée) est comprise entre 0,5 et 1,5 et est, de préférence, voisine de 1.

4. Procédé selon l'une des revendications 1 à 3, **caractérisé en ce que** l'étape (a) est effectuée à une température comprise entre 75 et 110°C, de préférence entre 100 et 110°C.

5. Procédé selon l'une des revendications 1 à 4 **caractérisé en ce que** la quantité de $H_2O_2$, exprimée en nombre de moles, est comprise entre 4 et 200 fois le nombre d'équivalent molaire de carbone d'origine organique présent dans l'hydrate technique de $BF_3$, de préférence entre 5 et 20 fois.

6. Procédé selon l'une des revendications 1 à 5 **caractérisé en ce que** le traitement par $H_2O_2$ est réalisé à une température comprise entre 80 et 115°C, de préférence entre 105 et 110°C.

7. Procédé selon l'une des revendications 1 à 6 **caractérisé en ce qu'**il est mis en oeuvre de façon continue et que l'on utilise trois réacteurs en série, le premier pour réaliser la réaction de l'oléum avec l'hydrate technique de $BF_3$, et récupérer en tête le $BF_3$ gazeux, et les deux autres pour procéder successivement mais dans un ordre quel-

conque, au traitement par $H_2O_2$ et au balayage à l'air.

8. Procédé selon la revendication 7 **caractérisé en ce que** le réacteur où s'effectue la réaction de l'oléum avec l'hydrate technique de $BF_3$ est un réacteur agité, dont le niveau du milieu réactionnel est maintenu constant au moyen d'une surverse débouchant dans un deuxième réacteur.


**Claims**

1. Process for preparing boron trifluoride and sulphuric acid from a technical $BF_3$ hydrate and oleum, **characterized in that** it comprises in succession the following steps:

   *(a)* reacting the oleum with the technical $BF_3$ hydrate,
   *(b)* recovering the gaseous $BF_3$ thereby liberated, and
   *(c)* subjecting the sulphuric acid by-product from step (a) to a treatment with hydrogen peroxide and to a treatment with air.

2. Process according to Claim 1, **characterized in that** the $BF_3$ content of the technical $BF_3$ hydrate is between 35 and 65.3%, preferably between 47 and 65.3%.

3. Process according to either of Claims 1 and 2, **characterized in that** in step (a) the amount of oleum (expressed in numbers of moles of $SO_3$) divided by the amount of technical hydrate (expressed in total number of moles of free or complexed water) is between 0.5 and 1.5 and, preferably is close to 1.

4. Process according to one of Claims 1 to 3, **characterized in that** step (a) is carried out at a temperature of between 75 and 110°C, preferably between 100 and 110°C.

5. Process according to one of Claims 1 to 4, **characterized in that** the amount of $H_2O_2$, expressed in number of moles, is between 4 and 200 times the number of molar equivalents of carbon of organic origin present in the technical $BF_3$ hydrate, preferably between 5 and 20 times.

6. Process according to one of Claims 1 to 5, **characterized in that** the treatment with $H_2O_2$ is carried out at a temperature of between 80 and 115°C, preferably between 105 and 110°C.

7. Process according to one of Claims 1 to 6, **characterized in that** it is operated continuously and **in that** three reactors in series are used, the first for carrying out the reaction of the oleum with the technical $BF_3$ hydrate and recovering the gaseous $BF_3$ at the top, and the two others for carrying out, in succession but in either order, the treatment with $H_2O_2$ and the air purging.

8. Process according to Claim 7, **characterized in that** the reactor in which the reaction of the oleum with the technical $BF_3$ hydrate takes place is a stirred reactor in which the level of the reaction medium is kept constant by means of an overflow leading into a second reactor.


**Patentansprüche**

1. Verfahren zur Herstellung Bortrifluorid und Schwefelsäure ausgehend von einem technischen $BF_3$-Hydrat und Oleum, **dadurch gekennzeichnet, daß** es aufeinanderfolgend die folgenden Verfahrensschritte umfaßt:

   (a) Reaktion von Oleum mit technischem $BF_3$-Hydrat,

   (b) Erhalt des auch auf diese Weise freigesetzten gasförmigen $BF_3$ und

   (c) Behandlung der in Verfahrensschritt (a) als Co-Produkt gebildeten Schwefelsäure mittels Wasserstoffperoxid und Behandlung mit Luft.

2. Verfahren nach Anspruch 1, **dadurch gekennzeichnet, daß** der $BF_3$-Gehalt des technischen $BF_3$-Hydrats 35 bis 65,3 %, vorzugsweise 47 bis 65,3 %, beträgt.

**3.** Verfahren nach Anspruch 1 oder 2, **dadurch gekennzeichnet, daß** in Verfahrensschritt (a) die Menge an Oleum (berechnet als Molzahl an $SO_3$), geteilt durch die Menge an technischem Hydrat (berechnet als Gesamtmolzahl an freiem oder komplexiertem Wasser), zwischen 0,5 und 1,5 liegt und vorzugsweise etwa 1 beträgt.

**4.** Verfahren nach einem der Ansprüche 1 bis 3, **dadurch gekennzeichnet, daß** der Verfahrensschritt (a) bei einer Temperatur zwischen 65 und 110 °C, vorzugsweise 100 und 110 °C, durchgeführt wird.

**5.** Verfahren nach einem der Ansprüche 1 bis 4, **dadurch gekennzeichnet, daß** die Menge an $H_2O_2$, berechnet als Molzahl, das 4- bis 200fache, vorzugsweise das 5-bis 20fache, der Moläquivalente von Kohlenstoff organischen Ursprungs, der in dem technischen $BF_3$-Hydrat vorhanden ist, beträgt.

**6.** Verfahren nach einem der Ansprüche 1 bis 5, **dadurch gekennzeichnet, daß** die Behandlung mit $H_2O_2$ bei einer Temperatur von 80 bis 115 °C, vorzugsweise 105 bis 110 °C, durchgeführt wird.

**7.** Verfahren nach einem der Ansprüche 1 bis 6, **dadurch gekennzeichnet, daß** es kontinuierlich durchgeführt wird und daß man drei in Serie geschaltete Reaktoren verwendet, den ersten Reaktor, um die Reaktion von Oleum mit technischem $BF_3$-Hydrat durchzuführen und am Kopf gasförmiges $BF_3$ zu erhalten, und die zwei anderen Reaktoren, um nacheinander, aber in beliebiger Reihenfolge die Behandlung mit $H_2O_2$ und das Spülen mit Luft durchzuführen.

**8.** Verfahren nach Anspruch 7, **dadurch gekennzeichnet, daß** der Reaktor, in dem die Reaktion des Oleums mit dem technischen $BF_3$-Hydrat durchgeführt wird, ein Rührreaktor ist, wobei das Niveau des Reaktionsmilieus mittels eines Überlaufs, der in einen zweiten Reaktor mündet, konstantgehalten wird.